# FASCICULE DE BREVET EUROPEEN

(11) **EP 4 453 047 B1**
(45) Date de publication et mention de la délivrance du brevet: **04.02.2026**
(21) Numéro de dépôt: 22834930.4
(22) Date de dépôt: 08.12.2022
(51) Int. Cl.: C08F 210/02, C08L 23/08

(54) **COPOLYMÈRES D'ÉTHYLÈNE ET DE 1,3-BUTADIÈNE**
COPOLYMERE AUS ETHYLEN UND 1,3-BUTEDIEN
COPOLYMERS OF ETHYLENE AND 1,3-BUTADIENE

(30) Priorité: 21.12.2021 FR 2114101
(43) Date de publication de la demande: 30.10.2024
(73) Titulaire: COMPAGNIE GENERALE DES ETABLISSEMENTS MICHELIN, 63000 Clermont-Ferrand (FR)
(72) Inventeur: NGO, Robert, 63040 CLERMONT-FERRAND CEDEX 09 (FR); THUILLIEZ, Julien, 63040 CLERMONT-FERRAND CEDEX 09 (FR); SOUCHARD, Thibaut, 63040 CLERMONT-FERRAND CEDEX 09 (FR)
(74) Mandataire: M.F.P. Michelin
(86) Numéro de dépôt international: PCT/EP2022/084960
(87) Numéro de publication internationale: WO 2023/117458

(56) Documents cités:
- WO-A1-2020/094993
- FR-A1- 3 104 595

## Description

Le domaine de la présente invention est celui des copolymères d'éthylène et de 1,3-butadiène destinés à être utilisés dans des huiles de moteur comme additifs pour améliorer la performance des huiles de moteur à haute température.

Les huiles de moteur, compositions lubrifiantes contenant des huiles de base minérales, sont utilisées dans un moteur pour minimiser à froid les pertes énergétiques causées par des frottements dans le moteur et pour maintenir à chaud un film continu de lubrifiant sur les éléments lubrifiés du moteur. Il est important que la viscosité de la composition lubrifiante diminue le moins possible pendant le fonctionnement à chaud pour éviter la rupture du film lubrifiant.

Les huiles de base minérales représentent un constituant majeur des compositions lubrifiantes que sont les huiles de moteur. La viscosité d'une huile de base minérale diminue avec une augmentation de la température et augmente avec une diminution de la température. Il s'ensuit que la viscosité d'une composition lubrifiante contenant majoritairement une huile de base minérale voit également sa viscosité varier avec la température.

Pour amoindrir l'effet d'une élévation de température sur la viscosité d'une composition lubrifiante, il est connu d'ajouter des additifs à une huile de base minérale. Ces additifs ont un rôle d'épaississement de la composition lubrifiante lorsque la température augmente pour remédier partiellement à la chute de la viscosité notée à chaud. Ils augmentent généralement la viscosité à haute température pour contrer la diminution de viscosité de l'huile de base minérale. Ces additifs épaississants sont généralement des polymères. Les deux grandes familles de polymères commercialisés à ce titre sont les polymères à fonction ester comme les poly(méth)acrylates et les polymères hydrocarbonés comme les polyisobutylènes, les copolymères d'éthylène et de propylène également appelés OCP, les copolymères de diène et de styrène hydrogénés, ainsi que les polydiènes hydrogénés.

La Demanderesse a découvert que des copolymères d'éthylène et de 1,3-butadiène peuvent augmenter la viscosité des huiles de base à haute température.

Ainsi, un premier objet de l'invention est un copolymère d'éthylène et de 1,3-butadiène qui contient des unités éthylène, des unités butadiène et des unités 1,2-cyclohexane et qui présente une masse molaire moyenne en nombre supérieure à 10000 g/mol, la teneur molaire en unités éthylène dans le copolymère étant supérieure à 90% et inférieure ou égale à 97%, la teneur molaire en unité 1,2-cyclohexane dans le copolymère étant supérieure à 1%, les teneurs molaires étant calculées par rapport au nombre de moles total d'unités éthylène, butadiène et 1,2-cyclohexane.

### Description détaillée

Tout intervalle de valeurs désigné par l'expression "entre a et b" représente le domaine de valeurs supérieur à "a" et inférieur à "b" (c'est-à-dire bornes "a" et "b" exclues) tandis que tout intervalle de valeurs désigné par l'expression "de a à b" signifie le domaine de valeurs allant de "a" jusqu'à "b" (c'est-à-dire incluant les bornes strictes "a" et "b").

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Le copolymère conforme à l'invention a pour caractéristique essentielle d'être un copolymère d'éthylène et de 1,3-butadiène, ce qui implique que les unités monomères du copolymère sont celles résultant de la copolymérisation de l'éthylène et du 1,3-butadiène. Le copolymère contient donc des unités éthylène et des unités butadiène. De manière connue, une unité éthylène est une unité monomère de motif -(CH₂-CH₂)-. De manière également connue, une unité butadiène est une unité monomère de motif -CH₂-CH(CH=CH₂)- ou -CH₂-CH=CH-CH₂- selon que le monomère 1,3-butadiène s'insère dans la chaîne polymère au cours de la réaction de polymérisation par une addition 2,1 ou 1,4. Le copolymère contient aussi des unités 1,2-cyclohexane. La présence de ces motifs cycliques hydrocarbonés saturés à 6 membres dans le copolymère résulte d'une insertion très particulière de l'éthylène et du 1,3-butadiène lors de leur copolymérisation, comme cela est par exemple décrit dans le document WO 2007054224. Une unité 1,2-cyclohexane répond à la formule (I).

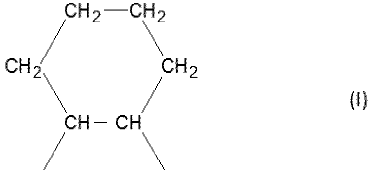

Dans la présente invention, les teneurs molaires en une unité dans le copolymère conforme à l'invention sont calculées par rapport au nombre de moles total d'unités éthylène, butadiène et 1,2-cyclohexane présentes dans le copolymère.

Dans le copolymère conforme à l'invention, la teneur molaire en unités éthylène est supérieure à 90% et inférieure ou égale à 97% et la teneur molaire en unité 1,2-cyclohexane est supérieure à 1%.

De préférence, la teneur molaire en unités éthylène dans le copolymère conforme à l'invention est de 92% à 97%. De manière plus préférentielle, la teneur molaire en unités éthylène dans le copolymère conforme à l'invention est de 92% à 96%.

Selon un mode de réalisation particulier de l'invention, la teneur molaire en unités éthylène dans le copolymère est de 92% à 95%.

De préférence, la teneur molaire en unités 1,2-cyclohexane dans le copolymère conforme à l'invention est supérieure ou égale à 2%. De préférence, la teneur molaire en unités 1,2-cyclohexane dans le copolymère conforme à l'invention est inférieure à 4%.

Selon un mode de réalisation préférentiel de l'invention, la teneur molaire en unités 1,2-cyclohexane dans le copolymère conforme à l'invention est supérieure à 1% et inférieure à 4%.

Selon un mode de réalisation particulièrement préférentiel de l'invention, la teneur molaire en unités 1,2-cyclohexane dans le copolymère conforme à l'invention est supérieure ou égale à 2% et inférieure à 4%.

De préférence, la teneur molaire en unité butadiène dans le copolymère conforme à l'invention est supérieure à 1%, préférentiellement supérieure ou égale à 2%. Selon l'un quelconque des modes de réalisation de l'invention, la teneur molaire en unité butadiène dans le copolymère conforme à l'invention est préférentiellement inférieure à 5%.

De préférence, plus de 30% en mole des unités butadiène dans le copolymère conforme à l'invention sont des unités 1,2 de formule -CH₂-CH(CH=CH₂)-. Lorsque le copolymère contient des unités 1,4 de formule -CH₂-CH=CH-CH₂-, préférentiellement plus de 50%, plus préférentiellement plus de 80% en mole des unités 1,4 sont de configuration trans. Selon l'un quelconque des modes de réalisation de l'invention, le copolymère conforme à l'invention contient préférentiellement des unités 1,2 de formule -CH₂-CH(CH=CH₂)- et des unités 1,4 de formule -CH₂-CH=CH-CH₂-.

Le copolymère conforme à l'invention a préférentiellement une température de fusion supérieure ou égale à 97°C, plus préférentiellement une température de fusion supérieure à 97°C.

De préférence, le copolymère a un taux de cristallinité supérieure à 35%, préférentiellement compris entre 35% et 50%, plus préférentiellement compris entre 35 et 45%.

Selon un mode de réalisation de l'invention, le copolymère conforme à l'invention est un copolymère statistique.

Le copolymère conforme à l'invention a aussi pour caractéristique essentielle une masse molaire moyenne en nombre, Mn, supérieure à 10000 g/mol. De préférence, la masse molaire moyenne en nombre du copolymère conforme à l'invention est supérieure à 15000 g/mol. De manière plus préférentielle, la masse molaire moyenne en nombre du copolymère conforme à l'invention est supérieure à 20000 g/mol.

De préférence, le copolymère conforme à l'invention a une masse molaire moyenne en nombre inférieure à 200 000 g/mol, préférentiellement inférieure ou égale à 150 000 g/mol. De manière plus préférentielle, le copolymère a une masse molaire moyenne en nombre inférieure ou égale à 130 000 g/mol, préférentiellement inférieure ou égale à 100 000 g/mol.

Selon un mode de réalisation particulièrement préférentiel de l'invention, le copolymère conforme à l'invention a une masse molaire moyenne en nombre supérieure à 10000 g/mol et inférieure à 130 000 g/mol.

Selon un mode de réalisation particulièrement plus préférentiel de l'invention, le copolymère conforme à l'invention a une masse molaire moyenne en nombre supérieure à 10000 g/mol et inférieure à 100 000 g/mol.

Le copolymère conforme à l'invention présente de préférence une dispersité *Ð*, égale à Mw/Mn (Mw étant la masse molaire moyenne en poids) supérieure à 1 et inférieure à 5 préférentiellement inférieure à 4, plus préférentiellement inférieure à 3. Les valeurs de Mn, Mw et *Ð* sont mesurées par analyse de chromatographie à exclusion de taille avec un étalonnage polystyrène.

Le copolymère conforme à l'invention peut être préparé par copolymérisation d'éthylène et du 1,3-diène en présence d'un système catalytique. Le système catalytique comprend un métallocène de formule (II) et un organomagnésien

P(Cp¹Cp²)Nd(BH₄)_{(1+y)-}L_{y}-Nₓ (II)

Cp¹ et Cp², identiques ou différents, étant choisis dans le groupe constitué par les groupes fluorényles substitués et le groupe fluorényle non substitué de formule C₁₃H₈,
P étant un groupe pontant les deux groupes Cp¹ et Cp² et représentant un groupe ZR¹R², Z représentant un atome de silicium ou de carbone, R¹ et R², identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0,
L représentant un métal alcalin choisi dans le groupe constitué par le lithium, le sodium et le potassium,
N représentant une molécule d'un éther, de préférence diéthyléther ou tétrahydrofurane.

Dans la formule (II), l'atome de néodyme est relié à une molécule de ligand constitué des deux groupes Cp¹ et Cp² reliés entre eux par le pont P. De préférence, le symbole P, désigné sous le terme de pont, répond à la formule ZR¹R², Z représentant un atome de silicium, R¹ et R², identiques ou différents, représentant un groupe alkyle comprenant de 1 à 20 atomes de carbone. De manière plus préférentielle, le pont P est de formule SiR¹R², R¹ et R², étant

identiques et tels que définis précédemment. De manière encore plus préférentielle, P répond à la formule SiMe₂.

A titre de groupes fluorényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les fluorènes substitués, parce que ces derniers sont disponibles commercialement ou facilement synthétisables.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

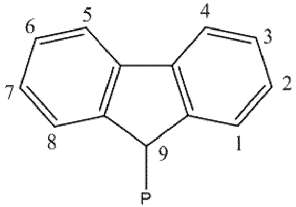

De préférence, Cp¹ et Cp² sont identiques. Avantageusement, dans la formule (II) Cp¹ et Cp² représentent chacun le groupe fluorényle. Le groupe fluorényle est de formule C₁₃H₈. De préférence, le métallocène est de formule (Ila), (IIb), (IIc), (IId) ou (Ile) dans lesquelles le symbole Flu présente le groupe fluorényle de formule C₁₃H₈.

[{Me₂SiFlu₂Nd(µ-BH₄)₂Li(THF)}₂] (IIa)

[Me₂SiFlu₂Nd(µ-BH₄)₂Li(THF)] (IIb)

[Me₂SiFlu₂Nd(µ-BH₄)(THF)] (IIc)

[{Me₂SiFlu₂Nd(µ-BH₄)(THF)}₂] (IId)

[Me₂SiFlu₂Nd(µ-BH₄)] (Ile)

L'organomagnésien utilisé dans le système catalytique à titre de co-catalyseur est un composé qui présente au moins une liaison C-Mg. A titre de composés organomagnésiens, on peut citer les diorganomagnésiens, en particulier les dialkylmagnésiens et les halogénures d'organomagnésien, en particulier les halogénures d'alkylmagnésien. Un diorganomagnésien est typiquement de formule MgR³R⁴ dans laquelle R³ et R⁴, identiques ou différents, représentent un groupe carboné. On entend par groupe carboné un groupe qui contient un ou plusieurs atomes de carbone. De préférence, R³ et R⁴ contiennent 2 à 10 atomes de carbone. De manière plus préférentielle, R³ et R⁴ représentent chacun un alkyle. L'organomagnésien est avantageusement un dialkylmagnésien, mieux le butyléthylmagnésium ou le butyloctylmagnésium, encore mieux le butyloctylmagnésium.

Le système catalytique peut être préparé de façon traditionnelle par un procédé analogue à celui décrit dans la demande de brevet WO 2007054224. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène.

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224. Le métallocène peut être préparé de façon traditionnelle par un procédé analogue à celui décrit dans la demande de brevet WO 2007054224, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

L'homme du métier adapte le rapport molaire de l'organomagnésien sur le métal Nd constituant le métallocène selon la masse molaire du copolymère souhaitée. Le rapport molaire peut atteindre la valeur de 100, sachant qu'un rapport molaire inférieur à 10 est plus favorable pour l'obtention de polymères de masses molaires élevées.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre. En particulier, les solvants sont généralement purifiés, par exemple de manière connue par distillation, par traitement sur des colonnes d'alumine, par bullage d'un gaz inerte comme l'azote ou l'argon ou par traitement avec un composé organométallique tel qu'un organolithien, un organomagnésien ou un organoaluminique.

Le système catalytique est généralement introduit dans le réacteur contenant le solvant de polymérisation et les monomères.

Le système catalytique peut être préparé de façon traditionnelle par un procédé analogue à celui décrit dans la demande de brevet WO 2007054224. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du copolymère conforme à l'invention.

Alternativement, le système catalytique peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un diène conjugué, l'éthylène ou un mélange d'éthylène et d'un diène conjugué, auquel cas le système catalytique est à base au moins du métallocène, de l'organomagnésien et du monomère de préformation. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un diène conjugué, l'éthylène ou un mélange d'éthylène et d'un diène conjugué. Le système catalytique ainsi obtenu peut être utilisé tout de suite après sa synthèse dans le procédé de synthèse du copolymère conforme à l'invention ou être stocké sous atmosphère inerte, notamment à une température allant de -20°C à la température ambiante (23°C), avant son utilisation dans le procédé de synthèse du copolymère conforme à l'invention.

L'homme du métier adapte aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la copolymérisation ainsi que la manipulation des monomères, du système catalytique et du ou des solvants de polymérisation se font dans des conditions anhydres et sous atmosphère inerte.

La polymérisation est conduite de préférence en solution, en procédé continu, semi-continu ou discontinu. Le solvant de polymérisation peut être un solvant hydrocarboné, aromatique ou aliphatique. A titre d'exemple de solvant de polymérisation, on peut citer le toluène et le méthylcyclohexane. Les monomères peuvent être introduits dans le réacteur contenant le solvant de polymérisation et le système catalytique ou inversement le système catalytique peut être introduit dans le réacteur contenant le solvant de polymérisation et les monomères. Les monomères et le système catalytique peuvent être introduits simultanément dans le réacteur contenant le solvant de polymérisation, notamment dans le cas d'une polymérisation en continu. La polymérisation est conduite typiquement dans des conditions anhydres et en l'absence d'oxygène, en présence éventuelle d'un gaz inerte. La température de polymérisation varie généralement dans un domaine allant de 25 à 120°C, préférentiellement 30 à 100°C.

Au cours de la polymérisation de l'éthylène et du 1,3-butadiène dans un réacteur de polymérisation, un ajout continu d'éthylène et du 1,3-butadiène peut être réalisé dans le réacteur de polymérisation, auquel cas le réacteur de polymérisation est un réacteur alimenté. Ce mode de réalisation est tout particulièrement adapté pour la synthèse de copolymères statistiques.

La polymérisation peut être stoppée par refroidissement du milieu de polymérisation ou par ajout d'un alcool, préférentiellement un alcool contenant 1 à 3 atomes de carbone, par exemple l'éthanol. Le polymère peut être récupéré selon les techniques classiques connues de l'homme du métier, par exemple par précipitation, par évaporation du solvant sous pression réduite ou par stripping à la vapeur d'eau.

Le copolymère conforme à l'invention est ajouté à une huile de base minérale pour augmenter son indice de viscosité et former une composition lubrifiante adaptée à l'usage envisagé.

Comme huiles de base minérales qui peuvent convenir, on peut citer les huiles de base du groupe I, les huiles de base du groupe II et les huiles de base du groupe III, les groupes I à III étant définis selon l'« American Petroleum Institute » (APl) dans sa publication « API N°1509 Engine Oil Licensing and Certification Système, Appendix E, 14th Edition » de décembre 1996.

Le taux de copolymère conforme à l'invention ajouté à une huile de base minérale est ajusté par l'homme du métier selon la nature de l'huile de base minérale, selon les caractéristiques du copolymère comme sa teneur en unités éthylène, sa teneur en unité cyclohexane et sa masse molaire moyenne en nombre, et bien sûr selon l'usage de la composition lubrifiante. Le taux de copolymère ajouté à l'huile de base minérale peut aller jusqu'à 5% en poids d'huile de base minérale, par exemple de 0.01 à 5% en poids d'huile de base minérale, préférentiellement de 0.05 à 2%.

L'huile de base additionnée d'un copolymère selon l'invention à un taux ajusté par l'homme du métier pour obtenir l'épaississement souhaité constitue une composition lubrifiante qui peut contenir par ailleurs d'autres additifs traditionnellement utilisés dans une huile de moteur tels que des détergents et dispersants, des antioxydants, des composés ayant une action contre la formation de rouille, de mousse, de gel.

Ajoutés à une huile de base minérale, les copolymères conformes à l'invention ont la propriété d'augmenter sa viscosité à haute température à l'instar des copolymères d'éthylène et de propylène communément utilisés comme additifs dans des huiles de moteur. Les copolymères selon l'invention peuvent s'avérer même plus efficaces comme épaississant à haute température, typiquement à 100°C, que les copolymères d'éthylène et de propylène contenant généralement au plus 50% en mole d'unités éthylène, typiquement utilisés comme additifs épaississants des huiles de base. En effet, pour une même quantité ajoutée à une huile de base minérale, la variation de viscosité est au moins aussi importante, voire plus importante avec un copolymère conforme à l'invention qu'avec un copolymère d'éthylène et de propylène. Cette augmentation d'efficacité est attribuée à la fois à la teneur molaire élevée en unité éthylène et à la présence d'unité 1,2-cyclohexane dans le copolymère conforme à l'invention.

Le copolymère qui contient un taux de cristallinité compris entre 35 et 45% selon un mode de réalisation de l'invention ou un taux d'unité éthylène allant de 92% à 95% selon un autre mode de réalisation particulier de l'invention a aussi les propriétés d'un améliorant d'indice de viscosité (en anglais « viscosity improver » ou « viscosity index improver), puisqu'il augmente l'indice de viscosité des compositions lubrifiantes. Les améliorants de viscosité utilisés dans les huiles de moteur comme les poly(méth)acrylates et les polymères OCP ont la faculté d'augmenter la viscosité à haute température pour contrer la diminution de viscosité de l'huile de base minérale sans l'augmenter significativement à basse température. L'action sélective des améliorants de viscosité sur la variation de la viscosité des huiles de base minérale avec la température, améliore les performances d'une huile de moteur qui se doit de minimiser à froid les pertes énergétiques causées par des frottements dans le moteur et de maintenir à chaud un film continu de lubrifiant sur les éléments lubrifiés du moteur.

Les caractéristiques précitées de la présente invention, ainsi que d'autres, seront mieux comprises à la lecture de la description suivante des exemples de réalisation de l'invention, donnés à titre illustratif et non limitatif.

### Exemples

### Détermination de la microstructure des polymères :

La spectroscopie RMN haute résolution des polymères a été effectuée sur un spectromètre Bruker 600 Avance III HD opérant à 600 MHz équipé d'une sonde CP2.1 BBO 60053 pour le proton. Les acquisitions sont faites à 368 K. L'orthodichlorobenzene (o-DCB) est utilisé comme solvant. Les échantillons ont été analysés à une concentration d'environ 1 % en masse pour les analyses en RMN du proton (RMN ¹H). Les déplacements chimiques sont déterminés relativement au signal proton de l'orthodichlorobenzène fixé à 7,2 ppm. Une analyse 2D a été réalisée en utilisant la séquence suivante : **HSQC** : Pulse program ; hsqcetgpsi2 « HSQC avec gradients » ; SW1 : 180 ppm (¹³C) SW2 : 12 ppm (¹H) ; d1 : 10 s ; Impulsion 90 ° « hard » ¹H P1 = 13 µs et 16 W et ¹³C P2 = 26 µs et 84 W ; Gradient : SMSQ10.100.

La détermination de la microstructure des copolymères est définie dans la littérature, selon l'article de Llauro et al., Macromolecules 2001, 34, 6304-6311

### Détermination de la macrostructure des polymères :

On utilise la chromatographie d'exclusion stérique (Size Exclusion Chromatography). On rappelle que la SEC permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et la dispersité (*Ð* = Mw/Mn) calculé via un étalonnage dit de MOORE.

Préparation du polymère : Il n'y a pas de traitement particulier de l'échantillon de polymère avant analyse. Celui-ci est simplement solubilisé, dans du 1,2,4-trichlorobenzène contenant 300 ppm de BHT (« butylated hydroxytoluene » ou hydroxytoluène butylé), à une concentration d'environ 1 g/l. La solution est agitée pendant 2h à 160°C avant injection, l'appareil chromatographe utilisé est équipé d'un système de filtration en ligne.

Analyse SEC : On utilise la chromatographie d'exclusion stérique à haute température ou SEC-HT. L'appareillage utilisé est un chromatographe «GPC-IR» équipé d'un détecteur à infrarouge « IR-6 » de « Polymer Char ». La détection est effectuée par le détecteur IR sur les bandes de vibrations des groupements CH₂ et CH₃. On utilise un jeu de 3 colonnes de référence commerciale « Mixed BN-LS » de « Polymer Char ». Le solvant d'élution est du 1,2,4-trichlorobenzène contenant 300 ppm de BHT, Le débit est de 1mL/min, la température du système est de 160°C et la durée d'analyse de 90 minutes (min).

Le volume injecté de la solution de l'échantillon de polymère est 200 µl. Le logiciel d'exploitation des données chromatographiques est le système « GPC-one » de « Polymer Char ».

Les masses molaires moyennes sont déterminées à partir d'une courbe d'étalonnage réalisée à partir de polystyrènes étalons commerciaux « PSS READY CAL-KIT ».

### Détermination du taux de cristallinité des polymères et de leur point de fusion :

Le taux de cristallinité et le point de fusion sont déterminés par analyse calorimétrique différentielle (DSC). Les analyses sont effectuées sur un appareil DSC « NETZSCH DSC 214 Polyma » calibré à l'indium. Cet appareil dispose d'une plage de température allant de -150 à 700 °C. Un ordinateur intégré à la DSC pilote l'appareil à l'aide du logiciel Proteus de chez Netzsch. L'échantillon (10 mg environ) est pesé et scellé dans un creuset en aluminium de 40 µL. Le creuset est percé avec une fine aiguille juste avant la mesure. Les échantillons sont analysés sous hélium à 40 mL/min suivant une méthode dynamique comportant 7 paliers de température :
Palier 1 : refroidissement de 25°C à -150°C à 50°C/min ; Palier 2 : isotherme à -150°C pendant 5 min ; Palier 3 : chauffage de -150°C à 200°C à 20°C/min ; Palier 4 : isotherme à 200°C pendant 5 min ; Palier 5 : refroidissement de 200°C à -150°C à 20°C/min ; Palier 6 : isotherme à -150°C pendant 5 minutes ; Palier 7 : chauffage de -150°C à 200°C à 20°C/min.

Les quatre premiers paliers permettent d'effacer le passé thermique de l'échantillon. Les mesures de la température de fusion (Tf) se font sur le 7^{ème} palier. Le 7^{ème} palier est également conservé pour obtenir des informations sur la cristallisation de l'échantillon et déterminer le taux de cristallinité.

Les valeurs de Tf sont déterminées en appliquant le retraitement de données du logiciel « Proteus » de chez « Netzsch ». Le taux de cristallinité est déterminé en utilisant la norme ISO 11357-3 : 2011 pour mesurer la température et l'enthalpie de fusion et de cristallisation des polymères utilisés par analyse calorimétrique différentielle (DSC). L'enthalpie de référence du polyéthylène est de 293 J/g (source : B. Wunderlich, Thermal analysis, Academic Press, 1990, 281).

### Détermination de la viscosité des compositions lubrifiantes :

Les résultats de viscosité sont présentés en base 100 par rapport à un témoin. Le témoin consiste en la même huile de base qui est utilisée dans les compositions lubrifiantes. Les viscosités cinématiques à 100°C et l'indice de viscosité sont déterminées selon la norme ASTM 445-21 et ASTM D2270.

### Préparation des copolymères d'éthylène et de 1,3-butadiène :

Les copolymères sont préparés selon un procédé semi-continu, c'est un dire un procédé dit « batch alimenté ». Dans un réacteur de 80 L contenant du méthylcyclohexane (60 L) et chauffé à 100°C, on introduit de l'éthylène et du 1,3-butadiène selon un ratio massique donné dans le tableau 1 jusqu'à atteindre 6 bars de pression dans le réacteur maintenu à 100°C. On injecte dans le réacteur une solution de butyloctylmagnésium (BOMAG) à 0.88 mol/L dans le méthylcyclohexane, puis le système catalytique (2.66 mmol équivalent de Nd, soit 1.7 g de système catalytique). La température de réaction est régulée à une température de 100°C, la pression dans le réacteur augmente à 8 bars et la réaction de polymérisation démarre. La réaction de polymérisation se déroule à une pression constante de 8 bars. Le réacteur est alimenté tout au long de la réaction de polymérisation en éthylène et en 1,3-butadiène selon le ratio massique donné en éthylène et en 1,3-butadiène. Les conditions pour chacune des synthèses des polymères figurent dans le tableau 1, notamment le ratio massique en éthylène et en 1,3-butadiène et la quantité de solution de BOMAG.

Le système catalytique est un système catalytique préformé. Il est préparé dans le méthylcyclohexane à partir d'un métallocène, le [Me₂Si(Flu)₂Nd(µ-BH₄)₂Li(THF)] à 0.0065 mol/L, d'un co-catalyseur, le butyloctylmagnésium (BOMAG) dont le ratio molaire BOMAG/Nd est égal à 2.2, et d'un monomère de préformation, le 1,3-butadiène dont le ratio molaire 1,3-butadiène/Nd est égal à 90. Le milieu est chauffé à 80°C sur une durée de 5h. Il est préparé selon une méthode de préparation conforme au paragraphe II.1 de la demande de brevet WO 2017093654 A1.

Tous les réactifs sont obtenus commercialement excepté le métallocène de formule [{Me₂SiFlu₂Nd(µ-BH₄)₂Li(THF)}₂] qui peut être préparé selon le mode opératoire décrit dans le document WO 2007054224. Le butyloctylmagnésium BOMAG (20% en masse dans l'heptane, C = 0,88 mol L⁻¹) provient de Lanxess et est stocké dans une bonbonne métallique sous atmosphère inerte. L'éthylène, de qualité N35, provient de la société Air Liquide et est utilisé sans purification préalable. Le 1,3-butadiène est purifié sur gardes d'alumine. Le solvant méthylcyclohexane provenant de chez BioSolve est séché et purifié sur colonne d'alumine dans une fontaine à solvant provenant de chez mBraun et utilisés en atmosphère inerte. Toutes les réactions sont effectuées en atmosphère inerte.

La conversion de la réaction de polymérisation est mesurée par extrait sec, et lorsque la masse de 6 kg de polymère est atteinte, l'injection des monomères dans le réacteur est stoppée. 152 mL d'éthanol à 1 mol/L sont injectés pour stopper la réaction de polymérisation. 226 mL d'un antioxydant, Irganox 1520L à 218 g/L sont injectés dans le réacteur. Le contenu du réacteur est transféré dans un autre réacteur dit « réacteur de stripping » pour éliminer par entraînement à la vapeur le solvant tout en maintenant une température de 100°C. Le copolymère est récupéré, puis séché pendant 48 heures en étuve à 60°C sous vide et balayage d'azote.

La masse pesée de copolymère permet de déterminer l'activité catalytique moyenne du système catalytique exprimée en kilogramme de polymère synthétisé par mole de métal néodyme et par heure (kg/mol.h).

Les caractéristiques de macrostructure des polymères figurent dans le tableau 1, celles de microstructure ainsi que la température de fusion et le taux de cristallinité dans le tableau 2. Le taux des unités est exprimé en pourcentage molaire calculé par rapport au nombre de moles total d'unités éthylène, butadiène et 1,2-cyclohexane.

**Tableau 1**

| **Exemple** | **Ratio massique butadiène/éthylène (g/g)** | **BOMAG (mL)** | **Activité kg/mol/h** | **Polymère** | **Mn (SEC) g/mol** | ***Ð*** |
|---|---|---|---|---|---|---|
| 1 | 0.14 | 182 | 984 | Poly 1 | 13500 | 2.2 |
| 2 | 0.14 | 67.5 | 981 | Poly 2 | 20200 | 2.3 |
| 3 | 0.14 | 36.9 | 1211 | Poly 3 | 72800 | 2.0 |
| 4 | 0.09 | 182 | 1457 | Poly 4 | 12800 | 2.4 |
| 5 | 0.09 | 67.5 | 1503 | Poly 5 | 18100 | 2.3 |

**Tableau 2 :**

| **Polymère** | **Unité éthylène** | **Unité 1,2-cyclohexane** | **Unités 1,2** | **Unités 1,4** | **Tf (°C)** | **Cristallinité (%)** |
|---|---|---|---|---|---|---|
| Poly 1 | 93.7 | 3.4 | 1.4 | 1.5 | 99 | 43 |
| Poly 2 | 93.4 | 3.8 | 1.3 | 1.5 | 100 | 41 |
| Poly 3 | 92.7 | 3.2 | 2.6 | 1.5 | 97 | 37 |
| Poly 4 | 95.8 | 2.2 | 1.1 | 0.9 | 116 | 46 |
| Poly 5 | 95.0 | 2.8 | 1.1 | 1.1 | 116 | 39 |

### Préparation des compositions lubrifiantes contenant une huile de base 100 ou 600 :

Douze compositions lubrifiantes sont préparées selon le mode opératoire suivant :
Dans une bouteille steinie de 250 mL contenant 200 g d'une huile de base sont introduits 1 g de polymère. La bouteille steinie est capsulée et mise sous agitation dans un bain thermostaté à 90°C pendant 12 heures. La viscosité du mélange résultant est mesurée à 100°C. Les polymères sont les polymères Poly 1, Poly 2, Poly 3, Poly 4 et Poly 5 ainsi qu'un polymère OCP commercialisé par la société Lubrizol sous la référence « 7077 », copolymère d'éthylène et de propylène à environ 50% molaire d'éthylène et un taux de cristallinité de 2.3%.

Chacune des compositions C1 à C5 et C7 à C11 contient une huile de base et un copolymère conforme à l'invention. L'huile de base des compositions C1 à C5 est une huile de base 600, celle des compositions C6 à C11 est une huile de base 100. Les compositions C0 et C6 contenant respectivement une huile de base 600 et 100 sont des compositions de référence, puisqu'elles contiennent en outre un copolymère non conforme à l'invention, le copolymère « 7077 » de la société Lubrizol, additif couramment utilisé dans les huiles de moteur comme agent épaississant à haute température (100°C). Les huiles de base « CORE^{™} 600 » et « CORE^{™} 100 » commercialisées par la société Exxon sont des huiles de base minérales de groupe I et sont couramment utilisées comme huile de base dans les huiles de moteur.

Les résultats de viscosités sont présentés dans les tableaux 3 et 4 en base 100 par rapport à un témoin. Le témoin des compositions lubrifiantes C0 à C5 est la composition lubrifiante T1 qui correspond à l'huile de base 600 seule. Le témoin des compositions lubrifiantes C6 à C11 est la composition lubrifiante T2 qui correspond à l'huile de base 100 seule.

**Tableau 3**

| Composition lubrifiante | T1 | C0 | C1 | C2 | C3 | C4 | C5 |
|---|---|---|---|---|---|---|---|
| Huile de base | 600 | 600 | 600 | 600 | 600 | 600 | 600 |
| Polymère | - | OCP | Poly 1 | Poly 2 | Poly 3 | Poly 4 | Poly 5 |
| Viscosité à 100°C | 100 | 103 | 108 | 108 | 111 | 103 | 106 |

**Tableau 4**

| Composition lubrifiante | T2 | C6 | C7 | C8 | C9 | C10 | C11 |
|---|---|---|---|---|---|---|---|
| Huile de base | 100 | 100 | 100 | 100 | 100 | 100 | 100 |
| Polymère | - | OCP | Poly 1 | Poly 2 | Poly 3 | Poly 4 | Poly 5 |
| Viscosité à 100°C | 100 | 105 | 110 | 115 | 132 | 107 | 113 |
| Indice de viscosité | 96 | 103 | 96 | 119 | 150 | 50 | 107 |

Il est observé que les compositions lubrifiantes contenant un copolymère conforme à l'invention (C1 à C5 et C7 à C11) ont une viscosité à 100°C qui est supérieure à celle de l'huile de base qu'elles contiennent (respectivement T1 et T2). Par ailleurs, il est noté que les viscosités des compositions C1 à C5 et C7 à C11 sont au moins égales ou supérieures à celles des compositions de référence respectives C0 et C6. Ce résultat est obtenu alors même que les copolymères selon l'invention ont une masse molaire moyenne en nombre très inférieure à celle du copolymère OCP. De manière surprenante, comme agent épaississant à haute température des huiles de base minérales, les copolymères selon l'invention s'avèrent aussi efficaces, voire plus efficaces qu'un copolymère OCP.

Il est également observé que l'utilisation des copolymères Poly 1, Poly 2, Poly 3 et Poly 5 dans une huile de moteur contenant une huile de base 100 a l'avantage non seulement d'augmenter la viscosité à haute température, mais aussi d'avoir une action sélective sur l'augmentation de la viscosité avec la température. En effet, l'indice de viscosité des compositions lubrifiantes C7, C8, C9 et C11 est au moins aussi élevé que la composition témoin T2 ou plus élevé que la composition de référence C6. De façon surprenante, les copolymères selon l'invention ayant un taux d'éthylène allant de 92 à 95% ont aussi la propriété d'améliorant de viscosité sélectif à haute température.

## Revendications

1. Copolymère d'éthylène et de 1,3-butadiène qui contient des unités éthylène, des unités butadiène et des unités 1,2-cyclohexane et qui présente une masse molaire moyenne en nombre supérieure à 10000 g/mol, la teneur molaire en unités éthylène dans le copolymère étant supérieure à 90% et inférieure ou égale à 97%, la teneur molaire en unité 1,2-cyclohexane dans le copolymère étant supérieure à 1%, les teneurs molaires étant calculées par rapport au nombre de moles total d'unités éthylène, butadiène et 1,2-cyclohexane.

2. Copolymère selon la revendication 1 dans lequel la teneur molaire en unités éthylène est de 92% à 97%, préférentiellement de 92% à 96%.

3. Copolymère selon la revendication 1 ou 2 dans lequel la teneur molaire en unités éthylène est de 92% à 95%.

4. Copolymère selon l'une quelconque des revendications 1 à 3 dans lequel la teneur molaire en unités 1,2-cyclohexane est supérieure ou égale à 2%.

5. Copolymère selon l'une quelconque des revendications 1 à 4 dans lequel la teneur molaire en unités 1,2-cyclohexane est inférieure à 4%.

6. Copolymère selon l'une quelconque des revendications 1 à 5 dans lequel la teneur molaire en unités butadiène est supérieure à 1%, préférentiellement supérieure ou égale à 2%.

7. Copolymère selon l'une quelconque des revendications 1 à 6 dans lequel la teneur molaire en unités butadiène est inférieure à 5%.

8. Copolymère selon l'une quelconque des revendications 1 à 7 dans lequel plus de 30% en mole des unités butadiène sont des unités 1,2 de formule -CH₂-CH(CH=CH₂)-.

9. Copolymère selon l'une quelconque des revendications 1 à 8 lequel copolymère a une température de fusion supérieure ou égale à 97°C, de préférence supérieure à 97°C.

10. Copolymère selon l'une quelconque des revendications 1 à 9 lequel copolymère a une masse molaire moyenne en nombre supérieure à 15000 g/mol.

11. Copolymère selon l'une quelconque des revendications 1 à 10 lequel copolymère a une masse molaire moyenne en nombre supérieure à 20000 g/mol.

12. Copolymère selon l'une quelconque des revendications 1 à 11 lequel copolymère a une masse molaire moyenne en nombre inférieure à 200 000 g/mol, préférentiellement inférieure ou égale à 150 000 g/mol.

13. Copolymère selon l'une quelconque des revendications 1 à 12 lequel copolymère a une masse molaire moyenne en nombre inférieure ou égale à 130 000 g/mol, préférentiellement inférieure ou égale à 100 000 g/mol.

14. Copolymère selon l'une quelconque des revendications 1 à 13, lequel copolymère est un copolymère statistique.

15. Copolymère selon l'une quelconque des revendications 1 à 14, lequel copolymère a un taux de cristallinité supérieure à 35%, préférentiellement compris entre 35% et 50%, plus préférentiellement compris entre 35 et 45%.

## Patentansprüche

1. Copolymer von Ethylen und 1,3-Butadien, das Ethylen-Einheiten, Butadien-Einheiten und 1,2-Cyclohexan-Einheiten enthält und eine zahlenmittlere Molmasse von mehr als 10.000 g/mol aufweist, wobei der molare Gehalt an Ethylen-Einheiten in dem Copolymer größer als 90 % und kleiner oder gleich 97 % ist und der molare Gehalt an 1,2-Cyclohexan-Einheiten in dem Copolymer größer als 1 % ist, wobei der molare Gehalt in Bezug auf die Gesamtzahl der Mole von Ethylen-, Butadien- und 1,2-Cyclohexan-Einheiten berechnet wird.

2. Copolymer nach Anspruch 1, wobei der molare Gehalt an Ethylen-Einheiten 92 % bis 97 %, bevorzugt 92 % bis 96 %, beträgt.

3. Copolymer nach Anspruch 1 oder 2, wobei der molare Gehalt an Ethylen-Einheiten 92 % bis 95 % beträgt.

4. Copolymer nach einem der Ansprüche 1 bis 3, wobei der molare Gehalt an 1,2-Cyclohexan-Einheiten größer oder gleich 2 % ist.

5. Copolymer nach einem der Ansprüche 1 bis 4, wobei der molare Gehalt an 1,2-Cyclohexan-Einheiten kleiner als 4 % ist.

6. Copolymer nach einem der Ansprüche 1 bis 5, wobei der molare Gehalt an Butadien-Einheiten größer als 1 %, bevorzugt größer oder gleich 2 %, ist.

7. Copolymer nach einem der Ansprüche 1 bis 6, wobei der molare Gehalt an Butadien-Einheiten kleiner als 5 % ist.

8. Copolymer nach einem der Ansprüche 1 bis 7, wobei es sich bei mehr als 30 Mol-% der Butadien-Einheiten um 1,2-Einheiten der Formel -CH₂-CH(CH=CH₂)- handelt.

9. Copolymer nach einem der Ansprüche 1 bis 8, wobei das Copolymer eine Schmelztemperatur größer oder gleich 97°C, vorzugsweise größer als 97 °C, aufweist.

10. Copolymer nach einem der Ansprüche 1 bis 9, wobei das Copolymer eine zahlenmittleren Molmasse von mehr als 15.000 g/mol aufweist.

11. Copolymer nach einem der Ansprüche 1 bis 10, wobei das Copolymer eine zahlenmittleren Molmasse von mehr als 20.000 g/mol aufweist.

12. Copolymer nach einem der Ansprüche 1 bis 11, wobei das Copolymer eine zahlenmittlere Molmasse von weniger als 200.000 g/mol, bevorzugt kleiner oder gleich 150.000 g/mol, aufweist.

13. Copolymer nach einem der Ansprüche 1 bis 12, wobei das Copolymer eine zahlenmittlere Molmasse kleiner oder gleich 130.000 g/mol, bevorzugt kleiner oder gleich 100.000 g/mol, aufweist.

14. Copolymer nach einem der Ansprüche 1 bis 13, wobei es sich bei dem Copolymer um ein statistisches Copolymer handelt.

15. Copolymer nach einem der Ansprüche 1 bis 14, wobei das Copolymer einen Kristallinitätsgrad von mehr als 35 %, vorzugsweise zwischen 35 % und 50 %, weiter bevorzugt zwischen 35 % und 45 %, aufweist.

## Claims

1. Copolymer of ethylene and of 1,3-butadiene which contains ethylene units, butadiene units and 1,2-cyclohexane units and which exhibits a number-average molar mass of greater than 10 000 g/mol, the molar content of ethylene units in the copolymer being greater than 90% and less than or equal to 97%, the molar content of 1,2-cyclohexane units in the copolymer being greater than 1%, the molar contents being calculated with respect to the total number of moles of ethylene, butadiene and 1,2-cyclohexane units.

2. Copolymer according to Claim 1, in which the molar content of ethylene units is from 92% to 97%, preferentially from 92% to 96%.

3. Copolymer according to Claim 1 or 2, in which the molar content of ethylene units is from 92% to 95%.

4. Copolymer according to any one of Claims 1 to 3, in which the molar content of 1,2-cyclohexane units is greater than or equal to 2%.

5. Copolymer according to any one of Claims 1 to 4, in which the molar content of 1,2-cyclohexane units is less than 4%.

6. Copolymer according to any one of Claims 1 to 5, in which the molar content of butadiene units is greater than 1%, preferentially greater than or equal to 2%.

7. Copolymer according to any one of Claims 1 to 6, in which the molar content of butadiene units is less than 5%.

8. Copolymer according to any one of Claims 1 to 7, in which more than 30 mol% of the butadiene units are 1,2- units of formula -CH₂-CH(CH=CH₂)-.

9. Copolymer according to any one of Claims 1 to 8, which copolymer has a melting point of greater than or equal to 97°C, preferably of greater than 97°C.

10. Copolymer according to any one of Claims 1 to 9, which copolymer has a number-average molar mass of greater than 15 000 g/mol.

11. Copolymer according to any one of Claims 1 to 10, which copolymer has a number-average molar mass of greater than 20 000 g/mol.

12. Copolymer according to any one of Claims 1 to 11, which copolymer has a number-average molar mass of less than 200 000 g/mol, preferentially of less than or equal to 150 000 g/mol.

13. Copolymer according to any one of Claims 1 to 12, which copolymer has a number-average molar mass of less than or equal to 130 000 g/mol, preferentially of less than or equal to 100 000 g/mol.

14. Copolymer according to any one of Claims 1 to 13, which copolymer is a statistical copolymer.

15. Copolymer according to any one of Claims 1 to 14, which copolymer has a degree of crystallinity of greater than 35%, preferentially of between 35% and 50%, more preferentially of between 35% and 45%.
